# EUROPÄISCHE PATENTANMELDUNG

(11) **EP 2 722 794 A2**
(43) Veröffentlichungstag der Anmeldung: **23.04.2014**
(21) Anmeldenummer: 13004861.4
(22) Anmeldetag: 09.10.2013
(51) Int. Cl.: G06K 19/07, G01R 31/28

(54) **Prüfen eines Schaltkreises**

(30) Priorität: 19.10.2012 DE 102012020551
(71) Anmelder: Giesecke & Devrient GmbH, 81677 München (DE)
(72) Erfinder: Finkenzeller, Klaus, 85774 Unterföhring (DE); Winkler, René, 81829 München (DE); Baldischweiler, Michael, 81825 München (DE)

(57) **Zusammenfassung**

Zum Prüfen eines zur Kontaktloskommunikation geeigneten Schaltkreises (110) mit einem elektronischen Bauelement sowie einer Antenne für einen portablen Datenträger wird der Schaltkreis (110) mit einem oder mehreren Energiepulsen angeregt (A) und eine in Antwort auf das Anregen (A) auftretende Schwingung des Schaltkreises (110) erfasst (E) und hinsichtlich Eigenresonanzeigenschaften des Schaltkreises (110) ausgewertet (I). Dabei wird beim Anregen und/ oder beim Auswerten eine Abhängigkeit der Eigenresonanzeigenschaften des Schaltkreises (110) von einem elektrischen Schaltkreiszustand, der bei dem Erfassen der zumindest einen Schwingung des Schaltkreises vorliegt, berücksichtigt.

## Beschreibung

Die vorliegende Erfindung betrifft ein Verfahren und eine Vorrichtung zum Prüfen eines zur Kontaktloskommunikation eingerichteten Schaltkreises, beispielsweise eines RFID-Schaltkreises, der insbesondere für einen portablen Datenträger vorgesehen sein kann.

Es ist bekannt, portable Datenträger, wie beispielsweise Pässe, Ausweise, Bezahlkarten, Kreditkarten oder auch Labels zur Warensicherung oder dergleichen, mit einer Antenne und einem damit verbundenen elektronischen Bauelement, zum Beispiel einem Chip, auszustatten, damit der portable Datenträger kontaktlos mit einem Lesegerät kommunizieren kann, z.B. gemäß einem RFID-Standard. Die Antenne ist dazu in der Regel als Antennenspule ausgestaltet und auf einem Träger oder einer Inlayschicht des Datenträgers aufgebracht, z.B. aufgedruckt.

Es sind Verfahren bekannt, mit denen elektrische Eigenschaften solcher Schaltkreise geprüft werden können, insbesondere um deren Funktionsfähigkeit sicherzustellen. Gemäß der US 6,236,220 B1 werden Schaltkreise geprüft, indem der Schaltkreis in einem elektromagnetischen Wechselfeld mit einer im Wesentlichen der Eigenresonanzfrequenz des Schaltkreises entsprechenden Frequenz zum Schwingen angeregt wird. Die angeregte Schwingung wird dann hinsichtlich der Eigenresonanzfrequenz und der Abklingkonstante untersucht. Für den Fall, dass bezüglich der Eigenresonanzfrequenz vorab nur sehr ungenaue Informationen vorhanden sind, schlägt die US 6,236,220 B1 ein Anregen mittels eines Rechteck-Signals vor.

Vor dem Hintergrund des Messverfahrens der US 6,236,220 B1 ist es wünschenswert, elektrische Eigenresonanzeigenschaften des Schaltkreises noch genauer bestimmen zu können und mit entsprechenden Messungen noch genauere Aussagen hinsichtlich der Funktionsfähigkeit des Schaltkreises zu erhalten.

Aufgabe der vorliegenden Erfindung ist es daher, eine noch genauere Prüfung der oben beschriebenen Schaltkreise zu ermöglichen.

Diese Aufgabe wird durch ein Verfahren sowie durch eine Prüfvorrichtung mit den Merkmalen der unabhängigen Ansprüche gelöst. Vorteilhafte Ausgestaltungen und Weiterbildungen der Erfindung sind in den abhängigen Ansprüchen angegeben.

Die Erfindung beruht wesentlich auf der Erkenntnis, dass die Eigenresonanzeigenschaften der eingangs beschriebenen Schaltkreise für die Kontaktloskommunikation häufig von einem aktuellen elektrischen Zustand des Schaltkreises, insbesondere von dem elektronischen Bauelement des Schaltkreises, abhängen.

Erfindungsgemäß wird der Schaltkreis mittels eines oder mehreren Energiepulsen angeregt, woraufhin eine Schwingung des Schaltkreises in Antwort auf das Anregen erfasst wird und anschließend hinsichtlich von Eigenresonanzeigenschaften des Schaltkreises ausgewertet wird. Hierbei betrifft der Begriff der Schwingung das in Reaktion auf das Anregen auftretende elektrische Schwingen des Schaltkreises - zumeist ein freies, gedämpftes Schwingen -, wobei z.B. ein Teil einer Periode, eine Periode oder auch mehr als eine Periode dieses Schwingens als Schwingung erfasst werden können.

Erfindungsgemäß wird die Abhängigkeit der Eigenresonanzeigenschaften des Schaltkreises von dem aktuellen Schaltkreiszustand, in dem der Schaltkreis beim Erfassen der Schwingung vorliegt, oder - im Falle mehrerer erfasster Schwingungen - von den jeweiligen Schaltkreiszuständen, in denen der Schaltkreis beim Erfassen der mehreren Schwingungen vorliegt, bei der Prüfung des Schaltkreises berücksichtigt. Diese Abhängigkeit kann beim Anregen des Schaltkreises oder beim Auswerten der erfassten Schwingung(en) oder bei beiden dieser Schritte berücksichtigt werden.

Dementsprechend sind die durch die Abhängigkeit der Eigenresonanzeigenschaften des Schaltkreises von individuellen Schaltkreiszuständen bewirkten Variationen der beim Auswerten bestimmten Messergebnisse nicht durch zufällige Messbedingungen beeinflusst, wie z.B. durch eine zufällige Pulsenergie, sondern sind präzise vorgegeben. Folglich können wesentlich genauere Aussagen über die Eigenresonanzeigenschaften des Schaltkreises gewonnen werden, bei denen zufällige Messfehler, die durch die Abhängigkeit der Eigenresonanzeigenschaften bzw. der Messergebnisse von dem elektrischen Zustand des Schaltkreises verursacht werden, stark reduziert sind.

Vorzugsweise wird die Abhängigkeit der Eigenresonanzeigenschaften des Schaltkreises von dem zumindest einen elektrischen Schaltkreiszustand dadurch berücksichtigt, dass der eine oder die mehreren Energiepulse derart ausgewählt werden, dass der Schaltkreis beim Anregen in zumindest einen vorbestimmten elektrischen Schaltkreiszustand versetzt wird. Das Auswählen geeigneter Energiepulse betrifft hierbei technische Parameter, wie z.B. die Pulsenergie, deren Anzahl und Pulsabstand oder dergleichen.

Geeignete Energiepulse können z.B. unter Zuhilfenahme von experimentell oder durch Simulationen bestimmten Erfahrungswerten ausgewählt werden. Die zumindest eine Schwingung des Schaltkreises wird dabei vorzugsweise genau dann erfasst, wenn sich der Schaltkreis in dem zumindest einen vorbestimmten elektrischen Schaltkreiszustand befindet. Da der oder die Schaltkreiszustände somit - abgesehen von Abweichungen durch apparative Ungenauigkeiten - bei der Messung genau wie vorgegeben vorliegen, treten die zuvor beschriebenen durch die Abhängigkeit der Messergebnisse von dem elektrischen Zustand des Schaltkreises verursachten Messungenauigkeiten bei dieser Ausführungsform der Erfindung gar nicht bzw. nur in vernachlässigbarem Maße auf.

Gemäß einer bevorzugten Ausführungsform wird der Schaltkreis derart gezielt angeregt, dass er in einen elektrischen Betriebszustand versetzt wird, d.h. in einen aktiven Zustand, in dem der Schaltkreis üblicherweise betrieben wird bzw. betriebsbereit ist. Dadurch kann auf einfache Art und Weise eine Schwingung des in dem Betriebszustand befindlichen Schaltkreises erfasst werden und daraus können Eigenresonanzeigenschaften des Schaltkreises bestimmt werden, wie sie während des tatsächlichen Betriebs des Schaltkreises auftreten.

Die Abhängigkeit der Eigenresonanzeigenschaften des Schaltkreises von einem vorliegenden elektrischen Schaltkreiszustand kann dabei zusätzlich oder alternativ auch beim Auswerten der erfassten Schwingung(en) berücksichtigt werden. In diesem Fall fließt in ein beim Auswerten ermitteltes Messergebnis neben der eigentlichen erfassten Schwingung auch eine Funktion oder ein Wert ein, die / der die Abhängigkeit der Eigenresonanzeigenschaften des Schaltkreises von demjenigen Schaltkreiszustand beschreibt, der beim Erfassen der Schwingung vorlag.

Bei dieser Variante braucht der Schaltkreis nicht in einen vorgegebenen elektrischen Schaltkreiszustand angeregt werden, obwohl dies natürlich möglich ist. Vielmehr genügt es, dass Erkenntnisse über den Schaltkreiszustand beim Erfassen vorliegen, um die Abhängigkeit der Eigenresonanzeigenschaften des Schaltkreises von diesem elektrischen Schaltkreiszustand auch beim Auswerten der erfassten Schwingung(en) zu berücksichtigen.

Derartige Erkenntnisse können aus Informationen über die Art und Weise der Anregung des Schaltkreises abgeleitet werden, z.B. aufgrund von Heuristiken oder Erfahrungswerten, die experimentell oder mittels Simulationen ermittelt wurden. Dabei genügt es, zu bestimmen, wie die Eigenresonanzeigenschaften durch den durch Anregen herbeigeführten elektrischen Schaltkreiszustand beeinflusst werden. Der tatsächliche, ggf. komplexe, elektrische Zustand des Schaltkreises während des Erfassens, der beispielsweise Ladezustände von Kondensatoren umfasst, muss jedoch nicht bekannt sein.

Durch alternatives oder zusätzliches Berücksichtigen der Abhängigkeit der Eigenresonanzeigenschaften des Schaltkreises vom elektronischen Schaltkreiszustand bei der Auswertung der erfassten Schwingung(en) können beispielsweise Eigenresonanzeigenschaften des Schaltkreises in einem elektrischen Zustand berechnet werden, der sich von dem beim Erfassen der Schwingung(en) vorliegenden Schaltkreiszustand unterscheidet. Dadurch können z.B. aus Schwingungen, die bei verschiedenen Schaltkreisen desselben Typs unter unterschiedlichen Schaltkreiszuständen erfasst wurden, Messergebnisse abgeleitet werden, die auf einen bestimmten Schaltkreiszustand normiert sind.

Gemäß einer bevorzugten Ausführungsform erfolgt das Anregen derart, dass der Schaltkreis in einen elektrischen Außerbetriebszustand versetzt wird, d.h. in einen - im Gegensatz zu einem Betriebszustand - inaktiven Zustand, in dem der Schaltkreis nicht betrieben wird bzw. nicht betrieben werden kann, oder darin verbleibt. Hierbei wird zumindest eine Schwingung des in dem Außerbetriebszustand befindlichen Schaltkreises erfasst. Beim Auswerten der erfassten Schwingung wird dann wiederum zumindest eine Eigenresonanzeigenschaft des Schaltkreises errechnet, wie sie in einem Betriebszustand (oder ggf. in einem Außerbetriebszustand) auftritt, errechnet, z.B. basierend auf Erfahrungswerten und Heuristiken.

Bei der zuvor beschriebenen Ausführungsform kann also eine Eigenschaft des Schaltkreises in einem Betriebszustand (oder Außerbetriebszustand) bestimmt werden, ohne dass der Schaltkreis tatsächlich in den betreffenden Betriebszustand (oder Außerbetriebszustand) versetzt wird. Dies ist beispielsweise dann sinnvoll, wenn eine Eigenschaft des Schaltkreises in einem (bestimmten) Betriebszustand (oder ggf. auch einem bestimmten Außerbetriebszustand) als eine Spezifikation des Schaltkreises zu bestimmen ist, ein Anregen des Schaltkreises in diesen Schaltkreiszustand jedoch unerwünscht ist, z.B. weil hierfür ein außerordentlich energiereicher Energiepuls oder eine Vielzahl von Energiepulsen erforderlich wären. Bei der zuvor beschriebenen Ausführungsform genügt hingegen ein Anregen der zur erfassenden Schwingung, ohne dass ein bestimmter Schaltkreiszustand, insbesondere ein Betriebszustand, erreicht wird, wofür i.A. ein einzelner relativ schwacher Energiepuls genügt.

Gemäß einer bevorzugten Ausführungsform der Erfindung erfolgt das Anregen des Schaltkreises mittels zumindest zwei, also mehreren in einem bestimmten Zeitabstand aufeinanderfolgenden, Energiepulsen. Durch diese Anregung kann der Schaltkreis in einen elektrischen Schaltkreiszustand versetzt werden, zu dessen Anregung andernfalls ein besonders energiereicher Energiepuls erforderlich wäre, der gegebenenfalls schwer zu erzeugen ist.

Überdies können durch geeignetes Anregen mit zumindest zwei Energiepulsen zumindest zwei verschiedene elektrische Schaltkreiszustände herbeigeführt werden. Gemäß der bevorzugten Ausführungsform werden nach der Anregung des Schaltkreises mit zumindest zwei Energiepulsen Schwingungen des Schaltkreises bei zumindest zwei verschiedenen - vorbestimmten oder nicht vorbestimmten - elektrischen Schaltkreiszuständen erfasst und gemeinsam ausgewertet, d.h. es wird ein Messergebnis bestimmt, in das beide erfassten Schwingungen einfließen.

Bei dieser Ausführungsform kann die Abhängigkeit der Eigenresonanzeigenschaften des Schaltkreises von dem elektronischen Schaltkreiszustand ausgenutzt werden, um zusätzliche Informationen über den Schaltkreis zu erlangen. Beispielsweise kann es sich bei dem elektronischen Bauelement, welches der Schaltkreis zusätzlich zu der Antenne umfasst, um einen Mikrochip handeln, der mittels der Antenne kontaktlos mit elektrischer Energie versorgt wird. Derartige Chips bzw. darin eingebaute Spannungsregler, Gleichrichter oder dergleichen, verursachen üblicherweise eine deutliche Abhängigkeit der Eigenresonanzeigenschaften von dem betreffenden Schaltkreiszustand. Dementsprechend kann durch gemeinsames Auswerten der zumindest zwei erfassten Schwingungen verschiedener Schaltkreiszustände genauer als durch ein Auswerten nur einer erfassten Schwingung bestimmt werden, ob sich der Chip oder ein Bestandteile des Chips tatsächlich wie vorgesehen verhält.

Dabei werden die zumindest zwei verschiedenen elektrischen Schaltkreiszustände vorzugsweise mittels Folgen von Energiepulsen mit unterschiedlichen Pulszahlen, d.h. unterschiedlichen Pulsfolgenlängen, erreicht, wobei die jeweiligen Energiepulse vorzugsweise identisch sind.

Bei Verwendung von Pulsfolgen mit mehreren Energiepulsen ist vorzugsweise ein zeitlicher Pulsabstand zwischen den einzelnen Energiepulsen zumindest fünf Mal so groß wie eine Halbwertsbreite einer (zeitlichen) Energieverteilung eines der Energiepulse. Das heißt, die Folge an Einzelpulsen unterscheidet sich bereits durch den Pulsabstand deutlich von einem Wellensignal. Besonders bevorzugt ist der Pulsabstand zumindest zehn Mal so groß und ganz besonders bevorzugt zumindest 100 Mal so groß wie diese Halbwertsbreite.

Ebenfalls bevorzugt beträgt eine Pulsfolgefrequenz der Energiepulse höchstens ein Fünftel, besonders bevorzugt höchstens ein Zehntel und ganz besonders bevorzugt höchstens ein Hundertstel einer Eigenresonanzfrequenz des Schaltkreises. Dies ermöglicht es, zwischen den Pulsen entsprechend viele Perioden einer jeweiligen Schwingung des Schaltkreises zu erfassen.

Vorzugsweise wird bei dem Schritt des Auswertens der erfassten Schwingung(en) ermittelt, ob der Schaltkreis defekt ist. Ein solcher Defekt kann insbesondere ein ungeeigneter Widerstand der Antenne, eine vollständige oder teilweise Unterbrechung der Antenne, ein Kurzschluss einer als Antenne dienenden Antennenspule, ein Defekt des elektronischen Bauelements oder ein Fehlen des elektronischen Bauelements in dem Schaltkreis oder dergleichen sein.

Der zum Anregen verwendete Energiepuls bzw. zumindest einer der zum Anregen verwendeten Energiepulse weist vorzugsweise eine Spektralfunktion auf, deren erste Nullstelle bei einer Frequenz liegt, die größer als eine Eigenresonanzfrequenz des Schaltkreises ist, vorzugsweise zumindest doppelt so groß, besonders bevorzugt zumindest fünf Mal so groß und ganz besonders zumindest zehn Mal so groß.

Da die Spektralfunktion des Energiepulses somit auch im Bereich der Eigenresonanzfrequenz des Schaltkreises relativ große Werte aufweist, regt er den Schaltkreis effektiv zum Schwingen an.

Bei dem Energiepuls handelt es sich vorzugsweise um einen Puls, dessen zeitliche Dauer so kurz ist, dass er einer Dirac'schen Deltafunktion ("Dirac-Stoß") möglichst nahe kommt.

Bei dem oder den Energiepulsen handelt es sich vorzugsweise um elektromagnetische Energiepulse, die induktiv auf die Antenne einwirken. Ebenfalls bevorzugt wird die Schwingung des Schaltkreises basierend auf von der Antenne emittierten elektromagnetischen Wellen erfasst. Das ermöglicht eine kontaktlose Prüfung des Schaltkreises.

Bei den von dem elektrischen Zustand des Schaltkreises abhängigen Eigenresonanzeigenschaften des Schaltkreises kann es sich insbesondere um die Eigenresonanzfrequenz und/ oder die Abklingkonstante handeln.

Der Schaltkreis ermöglicht eine RFID-Kommunikation, insbesondere mittels induktiver Kopplung, z.b. als NFC-Kommunikation. Der Schaltkreis könnte beispielsweise ein RFID-Schaltkreis eines RFID-Transponders, eines Mobilfunkgerätes oder eines Transaktionsterminals sein. Bei dem Schaltkreis handelt es sich vorzugsweise um einen Schaltkreis eines Sicherheitselements oder eines Inlays für ein Sicherheitselement. Das Sicherheitselement kann ein portabler Datenträger sein, beispielsweise in der Form von Chipkarte, sicherer Massenspeicherkarte, USB-Token oder RFID-Transponder. Das Sicherheitselement (bzw. der Schaltkreis) kann aber auch fest in ein Endgerät, wie Mobilfunkgerät, Computer oder Transaktionsterminal integriert sein, beispielsweise als TPM-Modul oder NFC-Modul.

Eine Prüfvorrichtung gemäß der Erfindung umfasst entsprechend eine Anregungseinrichtung mit einem Pulsgeber zum Anregen des Schaltkreises mittels dem oder den Energiepulsen, eine Erfassungseinrichtung zum Erfassen der zumindest einen Schwingung in Antwort auf das Anregen und eine Auswerteeinrichtung zum Auswerten der erfassten Schwingung hinsichtlich Eigenresonanzeigenschaften des Schaltkreises. Die Arbeitsweise und Funktionalität dieser Einrichtungen sind so, wie oben im Zusammenhang mit dem erfindungsgemäßen Prüfverfahren beschrieben.

Insbesondere ist die Anregungseinrichtung eingerichtet, beim Anregen in der oben beschriebenen Weise eine Abhängigkeit von Eigenresonanzeigenschaften des Schaltkreises von dem zumindest einen elektrischen Schaltkreiszustand zu berücksichtigen, bei dem die zumindest eine Schwingung des Schaltkreises erfasst wird. Zusätzlich oder alternativ ist die Auswerteeinrichtung eingerichtet, beim Auswerten in der oben beschriebenen Weise eine Abhängigkeit von Eigenresonanzeigenschaften des Schaltkreises von dem zumindest einen elektrischen Schaltkreiszustand zu berücksichtigen, bei dem die zumindest eine Schwingung des Schaltkreises erfasst wird.

Gemäß einer bevorzugten Ausführungsform umfasst die Anregungseinrichtung dabei eine Auswahleinrichtung, die eingerichtet ist, den einen oder die mehreren Energiepulse derart auszuwählen, dass der Schaltkreis wie zuvor beschrieben beim Anregen in zumindest einen vorbestimmten Schaltkreiszustand versetzt wird.

Dabei umfasst die Erfassungseinrichtung vorzugsweise eine Triggereinrichtung, die das Erfassen der angeregten Schwingung(en) des Schaltkreises derart steuert, dass die Schwingung(en) erfasst wird/werden, wenn der Schaltkreis in dem zumindest einen vorbestimmten elektrischen Schaltkreiszustand vorliegt.

Die Prüfvorrichtung kann eine Anregungsantenne zum Anregen des Schaltkreises mittels eines oder mehreren induktiv auf die Antenne des Schaltkreises einwirkenden elektromagnetischen Energiepulsen aufweisen und/ oder eine Erfassungsantenne zum Erfassen der Schwingung des Schaltkreises basierend auf von der Antenne des Schaltkreises emittierten elektromagnetischen Wellen. Anstatt einer speziellen Anregungs- und einer Erfassungsantenne kann auch dieselbe Prüfvorrichtungsantenne für die beiden zuvor genannten Zwecke verwendet werden.

Die Erfindung wird nachfolgend mit Bezug auf die beiliegenden Zeichnungen beispielhaft beschrieben. Darin zeigen:
- Figur 1: eine Prüfvorrichtung für einen Schaltkreis für einen portablen Datenträger,
- Figur 2: den Schaltkreis für einen portablen Datenträger,
- Figuren 3a, 3b: Schwingungen des Schaltkreises,
- Figur 4: ein Prüfverfahren zum Prüfen des Schaltkreises gemäß einer ersten Ausführungsform,
- Figuren 5a, 5b: Ladezustände eines Kondensator des Schaltkreises beim Prüfen gemäß der ersten Ausführungsform,
- Figur 6: ein Prüfverfahren gemäß einer zweiten Ausführungsform,
- Figur 7: ein Prüfverfahren gemäß einer dritten Ausführungsform,
- Figur 8: ein Prüfverfahren gemäß einer vierten Ausführungsform,
- Figur 9: ein Prüfverfahren gemäß einer fünften Ausführungsform,
- Figur 10: eine zum Anregen verwendete Pulsfolge elektromagnetischer Pulse und die dadurch verursachten Schwingungen des Schaltkreises,
- Figuren 11a bis 11c: zum Anregen verwendete elektromagnetische Pulse und
- Figur 11d: eine Frequenzverteilung eines zum Anregen verwendeten elektromagnetischen Pulses.

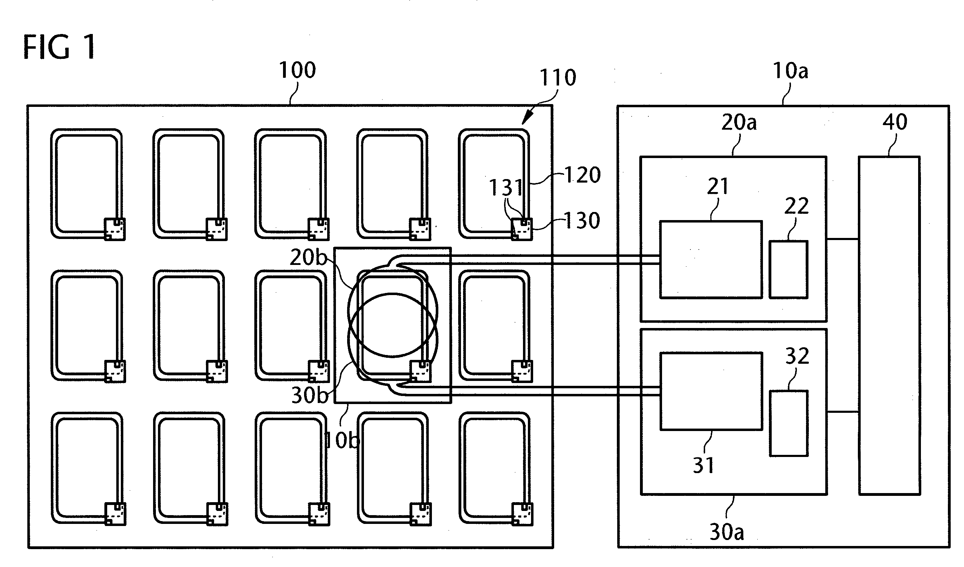

Figur 1 zeigt eine erfindungsgemäße Vorrichtung 10a,10b zum Prüfen eines Schaltkreises 110, der insbesondere für einen portablen Datenträger vorgesehen ist. Der Schaltkreis 110 umfasst einen Mikrochip 130 und eine mit Kontaktfeldern 131 des Mikrochips 130 verbundene aufgedruckte Antenne 120. Der Schaltkreis 110 ist auf einen Inlaybogen 100 aufgebracht, aus dem später mehrere einzelne Inlays mit jeweils einem Schaltkreis 110 herausgeschnitten werden, um diese jeweils in einen portablen Datenträger einzubringen.

Die Prüfvorrichtung 10a,10b umfasst einen Hauptteil 10a sowie eine Platine 10b, die über entsprechenden Leitungen mit dem Hauptteil 10a verbunden ist. Die Vorrichtung 10a,10b umfasst eine Anregungseinrichtung 20a, 20b, eine Erfassungseinrichtung 30a, 30b und eine Auswerteeinrichtung 40.

Die Anregungseinrichtung 20a, 20b umfasst einen Hauptteil 20a mit einem Pulsgeber 21 zum Erzeugen von Strompulsen, die genutzt werden, um über die auf der Platine 10b angeordnete Anregungsantenne 20b elektromagnetische Pulse auszusenden und damit den Schaltkreis 110 über dessen Antenne 120 anzuregen. Die Erfassungseinrichtung 30a, 30b umfasst in Analogie dazu eine Erfassungsantenne 30b zum Erfassen von elektromagnetischen Wellen, die von der Antenne 120 des Schaltkreises 110 emittiert wurden, und einen Hauptteil 30a mit einem Analog/ Digitalwandler 31 sowie gegebenenfalls einer Verstärkerschaltung. Die erfassten Wellen können mit der Auswerteeinrichtung 40, z.B. ein Computer oder Digitaler Signalprozessor, digital ausgewertet werden.

Die Platine 10b mit den Antennen 20b, 30b ist beweglich, so dass die einzelnen Schaltkreise 110 des Inlaybogens nacheinander geprüft werden können.

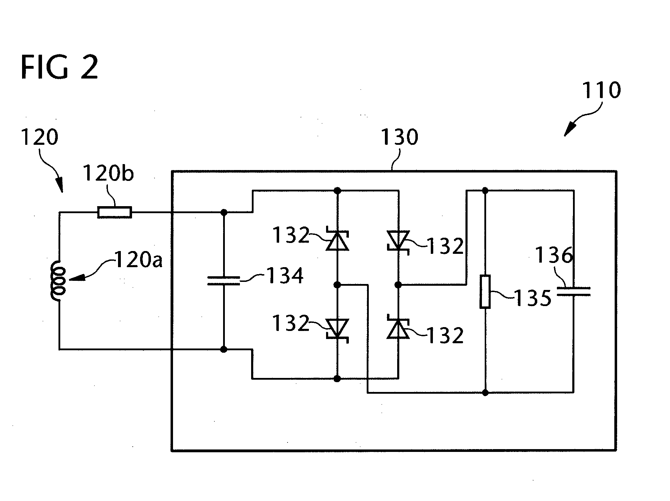

Figur 2 zeigt schematisch den Aufbau des Schaltkreises 110 für einen portablen Datenträger. Dieser umfasst, wie zuvor erwähnt, die Antenne 120 und den Chip 130. Der Chip 130 umfasst insbesondere einen aus mehreren Dioden 132 gebildeten Gleichrichter, der einen Lastwiderstand 135 mit einer Gleichspannung versorgt, z.B. eine Recheneinheit des Chips 130 oder ein beliebiger sonstiger mit elektrischer Energie zu versorgender Verbraucher. Parallel zu dem Gleichrichter ist ein Kondensator 136 zum Ausgleichen von Versorgungsspannungsschwankungen geschaltet. Weiterhin umfasst der Schaltkreis 110 noch ein Kondensator 134, der als Bestandteil des durch die Antennenspule 120 und die weiteren Komponenten des Schaltkreises 110 gebildeten Schwingkreises dazu dient, die Eigenresonanzfrequenz dieses Schwingkreises auf einen vorgegebenen Wert zu bringen. Überdies ist in Figur 2 zum besseren Verständnis noch ein Ersatzwiderstand 120b dargestellt, der den ohmschen Widerstand der Antennenspule 120a wiedergibt. In der Praxis ist ein separates, diesen Ersatzwiderstand 120b bildendes Bauelement jedoch nicht vorhanden, sondern der Widerstand wird durch die Antennenspule 120a hervorgerufen.

Um den Schaltkreis 110 zu prüfen, wird er mittels dem Pulsgeber 21 und der Anregungsantenne 20b der in Figur 1 dargestellten Prüfvorrichtung 10a,10b zum Schwingen angeregt, und zwar mittels eines auf die Antenne 120 des Schaltkreises einwirkenden elektromagnetischen Einzelpulses. Die daraus resultierende freie gedämpfte Schwingung des Schaltkreises 110 wird dann basierend auf von der Antenne 120 emittierten elektromagnetischen Wellen von der der Erfassungsantenne 30b erfasst und durch die Auswerteeinrichtung 40 ausgewertet.

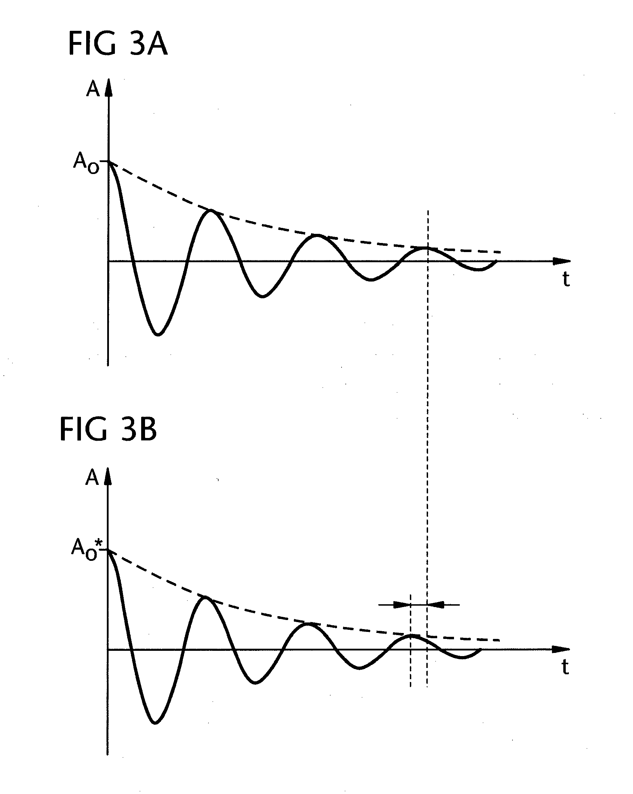

Es hat sich herausgestellt, dass die Eigenresonanzeigenschaften von Schaltkreisen von dem elektrischen Zustand des betreffenden Schaltkreises abhängen. Bei dem in Figur 2 dargestellten Schaltkreis 110 hängen diese Eigenresonanzeigenschaften insbesondere von dem Ladezustand des Kondensators 136 ab. Abhängig von dessen Ladezustand ändert sich die Impedanz des durch die Dioden 132 gebildeten Gleichrichters und damit die Eigenresonanzeigenschaften des Schaltkreises 110. Dies ist in den Figuren 3a und 3b illustriert.

Figur 3a zeigt das Ausschwingverhalten (Amplitude A der mit der Erfassungsantenne 30b erfassten elektromagnetischen Welle als Funktion der Zeit t) nach Anregen mit einem elektromagnetischen Puls bei nahezu ungeladenem Kondensator 136. Figur 3b zeigt das Ausschwingverhalten für den Fall, dass der Kondensator 136 einen für einen Betriebszustand des Datenträgers typischen Ladezustand aufweist. In beiden Fällen ist eine freie, gedämpfte Schwingung zu beobachten, d.h. die Amplitude des über die Antenne 30b erfassten Signals folgt der Funktion A=Ao exp (-δt) cos (ωt), wobei A₀ eine ursprüngliche Amplitude ist, δ die Abklingkonstante und ω die Eigenresonanzfrequenz. Jedoch unterscheiden sich die freien, gedämpften Schwingungen hinsichtlich der Eigenresonanzfrequenz ω (und, da der Schaltkreis mit geladenem Kondensator 136 sich leichter anregen lässt, auch hinsichtlich der ursprünglichen Amplitude Ao bzw. A₀*), wohingegen die Abklingkonstante δ im Wesentlichen gleich ist.

In der Praxis sind unterschiedlichste Aufbauten entsprechender Schaltkreise 110 vorstellbar. Dementsprechend kann bei anderen Schaltkreisen natürlich auch nicht nur die Eigenresonanzfrequenz ω signifikant variieren (vgl. Fig. 3), sondern auch die Abklingkonstante δ. Dies gilt insbesondere dann, wenn eine Recheneinheit als Lastwiderstand 135 vorgesehen ist, die, sobald der Schaltkreis in Betrieb gesetzt (d.h. in einen Betriebszustand versetzt) wird, ihren Betrieb aufnimmt und dadurch mehr Energie verbraucht. Insbesondere in diesem Fall kann die erfasste Schwingung auch von der zuvor beschriebenen Form einer freien, gedämpften Schwingung abweichen.

Gemäß der vorliegenden Erfindung werden derartige und beliebige sonstige Abhängigkeiten der Eigenresonanzeigenschaften des Schaltkreises 110 vom elektrischen Schaltkreiszustand beim Prüfen des Schaltkreises 110 berücksichtigt.

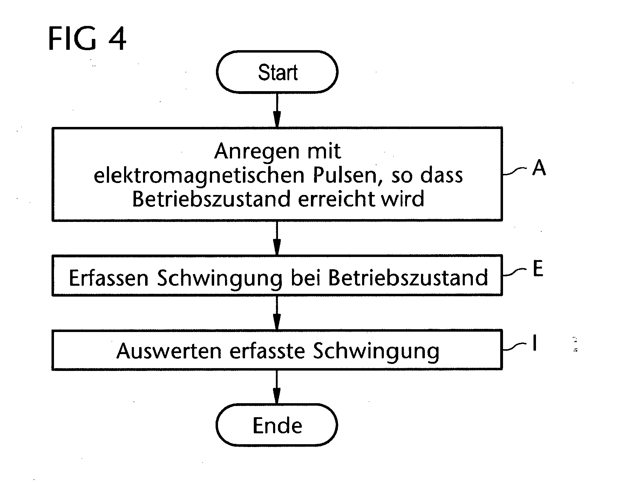

Gemäß dem in Figur 4 dargestellten ersten Ausführungsbeispiel, das einem ersten Aspekt der Erfindung folgt, wird hierzu der Schaltkreis mittels der Anregungseinrichtung 20a, 20b durch einen oder mehrere elektromagnetische Pulse derart angeregt (Schritt A), dass der Schaltkreis 110 in einen Betriebszustand versetzt wird, in dem der Kondensator 136 einen bei Betrieb des Schaltkreises 110 typischerweise auftretenden Ladezustand aufweist. Dann wird, während sich der Schaltkreis 110 in dem Betriebszustand befindet, eine Schwingung des Schaltkreises 110, die in Reaktion auf das Anregen mit den Pulsen auftritt, erfasst (Schritt E). Dabei handelt es sich um die in Figur 3b dargestellte Schwingung. Diese wird dann in hinsichtlich Eigenresonanzeigenschaften des Schaltkreises ausgewertet (Schritt I). Beispielsweise kann beim Auswerten der erfassten Schwingung die Eigenresonanzfrequenz ω und die Abklingkonstante δ des Schaltkreises 110 bestimmt werden.

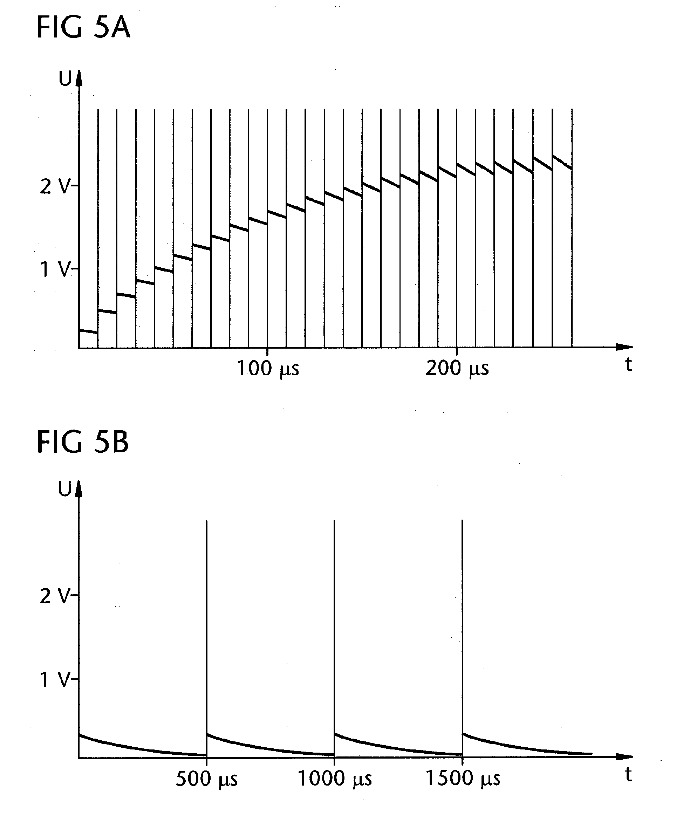

Wie bereits erwähnt, erfolgt bei diesem Ausführungsbeispiel das Anregen des Schaltkreises 110 mittels einem oder mehreren elektromagnetischen Pulsen. Sofern mehrere Pulse verwendet werden, muss deren Pulsabstand hinreichend kurz sein, so dass sich zwischen dem Einwirken der Pulse der Kondensator 136 nicht wieder entlädt. In Figur 5a ist der mittels Simulationsrechnungen ermittelte Ladezustand des Kondensator 136 (Spannung U in Volt) in Abhängigkeit von der Zeit t dargestellt, wobei die durch vertikale Linien dargestellten Anregungspulse einen zeitlichen Abstand von 10 µs haben. Der Kondensator 136 lädt sich durch das Anregen immer weiter auf, bis er schließlich einen Ladezustand erreicht, der bei einem Betriebszustand zu erwarten ist. Wie in Figur 5b dargestellt, entlädt sich der Kondensator 136 im Gegensatz dazu bei einem Pulsabstand von 500 µs nahezu vollständig zwischen den Anregungspulsen über den Lastwiderstand 135. Dementsprechend wird der Kondensator 136 kaum geladen und der Schaltkreis 110 nicht in den Betriebszustand versetzt.

Alternativ zum Anregen des Schaltkreises 110 zum Erreichen eines Betriebszustandes des Schaltkreises 110, kann das Anregen gemäß dem ersten Aspekt der Erfindung auch derart erfolgen, dass ein oder auch mehrere beliebig vorbestimmte Schaltkreiszustände erreicht werden, die nicht notwendigerweise Betriebszustände des Schaltkreises repräsentieren. Bei diesen vorbestimmten Schaltkreiszustände werden dann die Schwingung des Schaltkreises 110 erfasst.

Das Anregen zum Herbeiführen von einem oder mehreren vorbestimmten Schaltkreiszuständen erfordert zuvor ein Auswählen eines oder mehrerer hierfür geeigneter Energiepulse insbesondere hinsichtlich deren Pulsenergie und dem zeitlichem Abstand zwischen den Pulsen. Für diesen Zweck umfasst die Anregungseinrichtung 20a, 20b gemäß Fig. 1 zusätzlich noch eine Auswahleinrichtung 22.

Überdies umfasst die Erfassungseinrichtung 30a, 30b eine Triggereinrichtung 32, die das Erfassen derart steuert, dass die zumindest eine Schwingung erfasst wird, wenn der Schaltkreis in dem oder den vorbestimmten elektrischen Schaltkreiszustand/-zuständen vorliegt.

Bei dem vorgegebenen elektrischen Zustand des Schaltkreises 110 kann es sich auch um einen Sättigungszustand handeln, bei dem sich die Eigenresonanzeigenschaften des Schaltkreises 110 bei weiterem Anregen nicht mehr (signifikant) ändern. Abhängig vom Aufbau des Schaltkreises 110, insbesondere des elektronischen Bauelements 130, ist der oben genannte Betriebszustand häufig zugleich ein solcher Sättigungszustand.

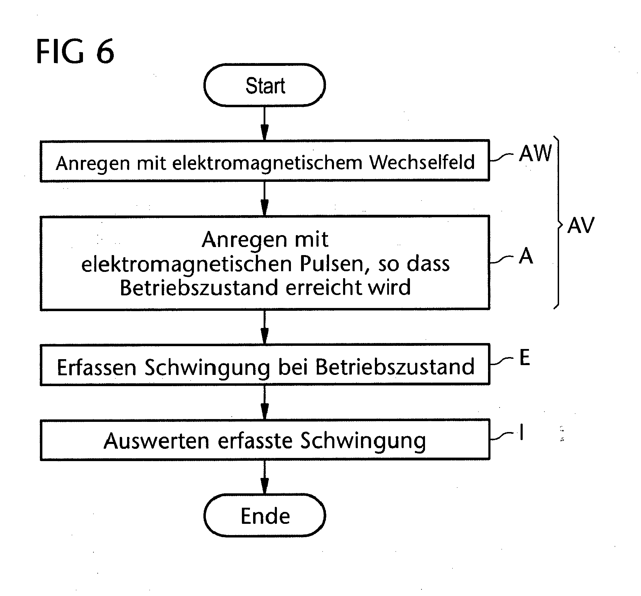

In Figur 6 ist eine zweite Ausführungsform des erfindungsgemäßen Prüfverfahrens dargestellt. Diese unterscheidet sich von der in Figur 4 dargestellten Ausführungsform dadurch, dass das Anregen des Schaltkreises 110 im Rahmen eines Anregungsvorgangs (AV) sowohl mit einem elektromagnetischen Wechselfeld (Schritt AW) als auch mit einem oder mehreren elektromagnetischen Pulsen (Schritt A) erfolgt. Dabei erfolgt das Anregen mit dem oder den Pulsen nach dem Anregen mit dem Wechselfeld, so dass eine mit einem oder mehreren Pulsen angeregte Schwingung erfasst wird. Ein Energiepuls im vorliegenden Sinne ist also kein Wechselfeld. Da der Schaltkreis 110 bereits mit dem Wechselfeld angeregt wurde, sind weniger energiereiche Pulse (z.B. nur ein Energiepuls) zum Anregen des Schaltkreises 110 in den Betriebszustand oder einen sonstigen vorgegebenen Zustand erforderlich.

Möglich ist auch, dass das Anregen des Schaltkreises 110 in dem Wechselfeld derart erfolgt, dass sich der Schaltkreis 110 bereits nach diesem Anregen in einem Betriebszustand befindet. Diese Anregung mit dem Wechselfeld kann beispielsweise 20 ms dauern. Das Anregen der zu erfassenden Schwingung mittels dem oder den elektromagnetischen Pulsen erfolgt erst nachdem das Wechselfeld und/oder mit dem Wechselfeld angeregte Schwingungen des Schaltkreises 110 ausgeklungen sind.

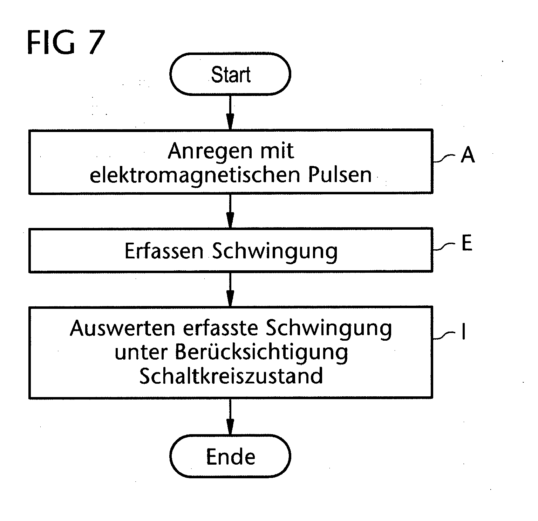

Figur 7 zeigt ein Prüfverfahren gemäß einem dritten Ausführungsbeispiel der Erfindung, das einem zweiten Aspekt der Erfindung folgt. Hierbei wird der Schaltkreis 110 zunächst mit einem oder mehreren elektromagnetischen Pulsen beliebig angeregt (Schritt A) und eine Schwingung des Schaltkreises 110 in Reaktion auf das Anregen erfasst (Schritt E). Diese Schwingung wird dann unter Berücksichtigung des Schaltkreiszustandes, in dem sich der Schaltkreis 110 während des Erfassungsschrittes befunden hat, ausgewertet (Schritt I).

Bei diesem Ausführungsbeispiel wird der Schaltkreis 110 nur geringfügig angeregt, so dass eine Schwingung, wie sie in Figur 3A dargestellt ist, erfasst wird. Bei dem Auswerten der Schwingung wird jedoch zu der Eigenresonanzfrequenz von Figur 3a ein aus - in der Regel schaltkreisspezifischen - Erfahrungswerten bestimmter Frequenz-Offset hinzu addiert, so dass schließlich die Eigenresonanzfrequenz des im Betriebszustand befindlichen Schaltkreises 110 entsprechend der in Figur 3b gezeigten Schwingung - errechnet wird. Analog kann auch eine entsprechende Abklingkonstante errechnet bzw. geschätzt werden, sofern diese durch den elektrischen Schaltkreiszustand signifikant beeinflusst wird.

Die Abhängigkeit der Eigenresonanzeigenschaften des Schaltkreises 110 kann bei der Auswertung natürlich auch in beliebiger sonstiger Art und Weise berücksichtigt werden, d.h. es kann ein beliebiges Messergebnis berechnet werden, in das die erfasste Schwingung sowie beliebige Erkenntnisse über die Abhängigkeit der Eigenresonanzeigenschaften des Schaltkreises 110 von dem beim Erfassen vorliegenden Schaltkreiszustand eingehen.

Sofern allerdings ein Defekt des Schaltkreises vorliegt und sich die Eigenresonanzeigenschaften des Schaltkreises 110 nicht wie erwartet mit dem elektrischen Schaltkreiszustand ändern, liefert das Verfahren gemäß den vorliegenden Ausführungsbeispiel unter Umständen falsche Ergebnisse. Auch bei dem vorliegenden Ausführungsbeispiel kann anstatt nur dem Anregen mit dem oder den Pulsen ein Anregungsvorgang AV durchgeführt werden, gemäß dem vor dem Anregen mit Pulsen ein Anregen mit einem elektromagnetischen Wechselfeld erfolgt.

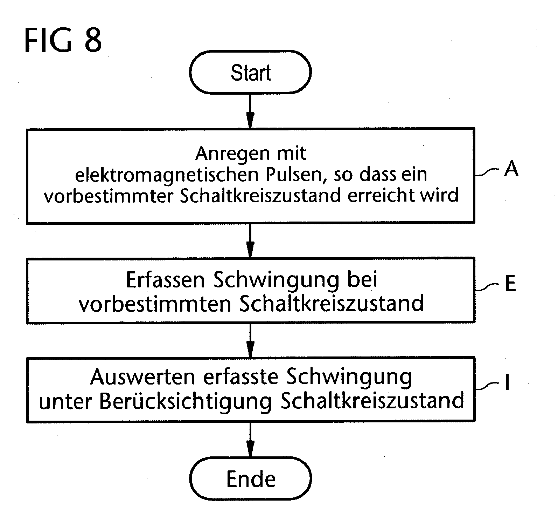

Das in Figur 8 dargestellte Prüfverfahren gemäß einem vierten Ausführungsbeispiel kombiniert den ersten und den zweiten Aspekt der Erfindung. Dementsprechend wird durch das Anregen mit den Pulsen (Schritt A) ein vorbestimmter Schaltkreiszustand erreicht und eine Schwingung des Schaltkreises 110 bei dem vorbestimmten Schaltkreiszustand erfasst (Schritt E) und unter Berücksichtigung der Abhängigkeit der Eigenresonanzeigenschaften des Schaltkreises 110 von dem Schaltkreiszustand ausgewertet (Schritt I). Dabei kann z.B. eine Eigenschaft des Schaltkreises 110 in einem anderen elektrischen Schaltkreiszustand als dem, in dem er sich bei dem Erfassen befindet, errechnet werden, wobei der vorbestimmte Schaltkreiszustand, in dem sich der Schaltkreis 110 bei dem Erfassen befindet, derart vorgegeben ist, dass diese Berechnung erleichtert wird. Letzteres ist z.B. der Fall, wenn die Eigenresonanzeigenschaften in dem vorbestimmten Schaltkreiszustand von denen in dem anderen elektrischen Schaltkreiszustand nur geringfügig abweichen.

Zusätzlich zu dem Anregen mit den elektromagnetischen Pulsen in Schritt A kann natürlich auch bei diesem Ausführungsbeispiel im Rahmen eines Anregungsvorgangs zuvor ein Anregen mit einem elektromagnetischen Wechselfeld erfolgen.

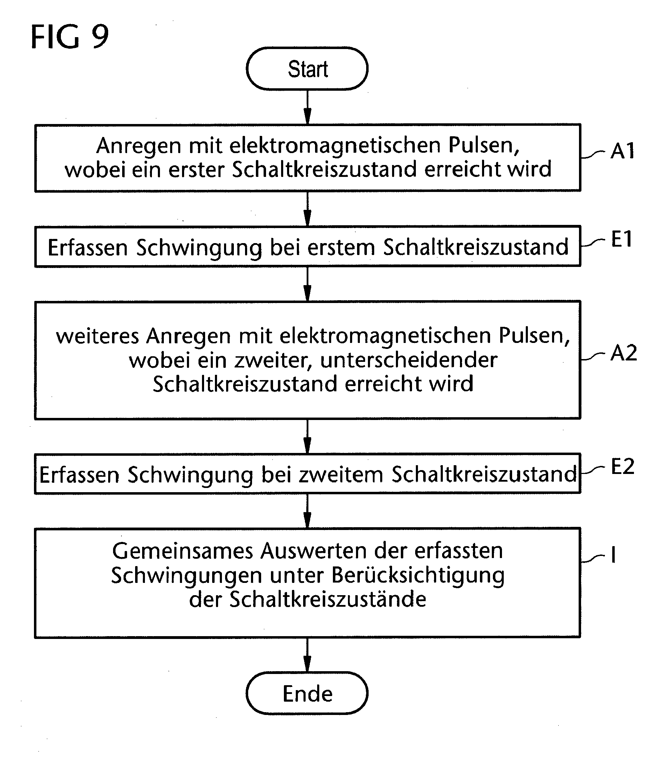

Das in Figur 9 dargestellte fünfte Ausführungsbeispiel eines erfindungsgemäßen Prüfverfahrens folgt dem zweiten Aspekt der Erfindung und kann zudem mit den ersten Aspekt der Erfindung kombiniert werden. Gemäß diesem Ausführungsbeispiel wird der Schaltkreis 110 im Schritt A1 mit einem oder mehreren elektromagnetischen Pulsen angeregt, wobei ein erster (vorgegebener oder nicht vorgegebener) Schaltkreiszustand erreicht wird, bei dem im Schritt E1 eine Schwingung des Schaltkreises 110 erfasst wird. Anschließend wird der Schaltkreis 110 mit einem oder mehreren weiteren elektromagnetischen Pulsen weiter angeregt (Schritt A2), wobei ein zweiter, sich von dem ersten Schaltkreiszustand unterscheidender Schaltkreiszustand erreicht wird, bei dem eine zweite Schwingung des Schaltkreises 110 erfasst wird (Schritt E2). Beispielsweise kann der Schaltkreis 110 mit zwei identischen elektromagnetischen Pulsen angeregt werden, wobei die erste Schwingung nach dem ersten elektromagnetischen Puls erfasst wird, und die zweite Schwingung nach dem zweiten elektromagnetischen Puls bei einem Schaltkreiszustand, der durch die beiden Pulse hervorgerufen wird.

Die beiden erfassten Schwingungen werden in Schritt I gemeinsam ausgewertet, wobei eine Abhängigkeit der Eigenresonanzeigenschaften des Schaltkreises 110 von den beim Erfassen der jeweiligen Schwingungen vorliegenden Schaltkreiszuständen berücksichtigt wird.

Bei dieser Auswertung kann insbesondere ausgenutzt werden, dass Eigenresonanzeigenschaften des Schaltkreises 110 vom Ladezustand des Kondensators 136 abhängen, um zu prüfen, ob sich der Ladezustand durch das unterschiedliche Anregen tatsächlich wie erwartet ändert, wofür ein einfacher Abgleich mit Erfahrungs- oder Referenzwerten genügt. Sofern dies nicht der Fall ist, kann davon ausgegangen werden, dass ein Defekt des Schaltkreises 110 vorliegt, zum Beispiel ein überhöhter Stromverbrauch des Lastwiderstandes 135, wodurch sich der Kondensator 136 nicht wie erwartet lädt.

Das in Figur 9 dargestellt Prüfverfahren kann noch weitere Anregungs- und Erfassungsschritte umfassen, wobei die weiteren bei unterschiedlichen elektrischen Schaltkreiszuständen erfassten Schwingungen ebenfalls in der gemeinsamen Auswertung berücksichtigt werden, z.B. indem sie mit Erfahrungs- oder Referenzwerten abgeglichen werden.

Grundsätzlich können Defekte des Schaltkreises, wie ein ungeeigneter Widerstand der Antenne 120, eine Unterbrechung der Antenne 120, eine teilweise Unterbrechung der Antenne 120, ein Kurzschluss einer als Antenne 120 dienenden Antennenspule, ein Defekt des elektronischen Bauelements 130 sowie ein Fehlen des elektronischen Bauelements 130 in dem Schaltkreis 110 häufig bereits anhand einer Analyse der Eigenresonanzeigenschaften des mit einem elektromagnetischen Puls angeregten Schaltkreises 110 ermittelt werden. Beispielsweise führt ein durch unsachgemäßes Aufdrucken einer gedruckten Antenne 120 bewirkter zu hoher Widerstand der Antenne 120 im allgemeinen zu einem schnelleren Abklingen der Schwingung, eine vollständige Unterbrechung zu einer deutlich erhöhten Eigenresonanzfrequenz, eine teilweise Unterbrechung zu einer erhöhten Eigenresonanzfrequenz und einem schnelleren Abklingen und ein Kurzschluss einer Antennenspule zu einer charakteristisch verzerrten erfassten Schwingung.

Durch die beschriebene Analyse von mehreren Schwingungen des Schaltkreises 110 bei unterschiedlichen elektrischen Schaltkreiszuständen können jedoch unter Umständen wesentlich genauere Informationen über den jeweiligen Defekt des Schaltkreises 110 ermittelt werden, insbesondere durch Vergleich mit entsprechenden Erfahrungs- oder Referenzwerten, die experimentell oder mittels Simulationsrechnungen ermittelt werden können. Beispielsweise kann ein Fehlen des elektronischen Bauelements 130 in einem Schaltkreis 110 in der Regel zuverlässig daran erkannt werden, dass die Eigenresonanzeigenschaften des Schaltkreises 130 nicht mehr abhängig von einem durch Anregen veränderbaren Schaltkreiszustand sind.

In Analogie zu den vorherigen Ausführungsbeispielen, kann natürlich auch bei diesem Ausführungsbeispiel vor dem jeweiligen Anregen mit den Pulsen A1 und A2 im Rahmen eines Anregungsvorgangs auch ein Anregen mittels elektromagnetischen Wellen erfolgen.

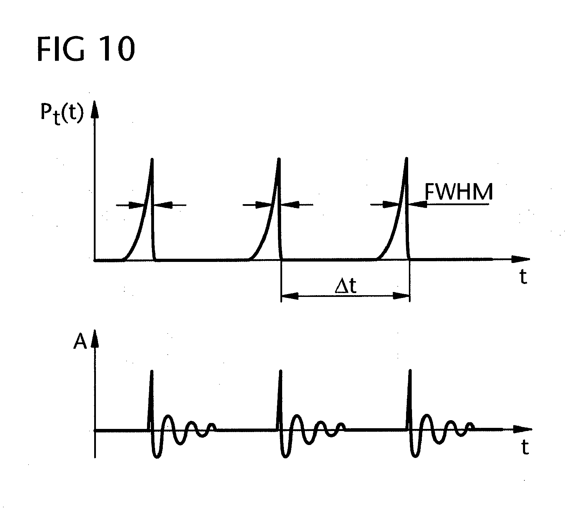

Figur 10 zeigt in dem oberen Diagramm eine Folge von Einzelpulsen, wie sie z.B. in einem Prüfverfahren gemäß dem in Figur 9 dargestellten fünften Ausführungsbeispiel verwendet werden kann. Dabei ist die übertragene Energie Pt(t) als Funktion der Zeit dargestellt. Der Abstand Δt der Pulse ist um mehr als einen Faktor fünf größer als die Halbwertsbreite FWHM der Energieverteilung Pt der Pulse, wodurch sich die Pulsfolge sehr deutlich von einem Wellensignal unterscheidet. Überdies beträgt die Frequenz der Pulsfolge weniger als ein Fünftel der Eigenresonanzfrequenz des Schaltkreises 110, weshalb, wie in unteren Teil der Figur 10 dargestellt, zwischen den Pulsen mehrere Perioden der Schwingung des Schaltkreises 110 erfasst werden können. Obwohl der Pulsabstand ein Erfassen mehrerer Schwingungsperioden zwischen den Pulsen erlaubt, kann der Schaltkreis 110 dennoch durch die Pulsfolge in einen beliebigen elektrischen Schaltkreiszustand angeregt werden, da sich der Kondensator 136 während der Zeitspanne Δt nur minimal entlädt.

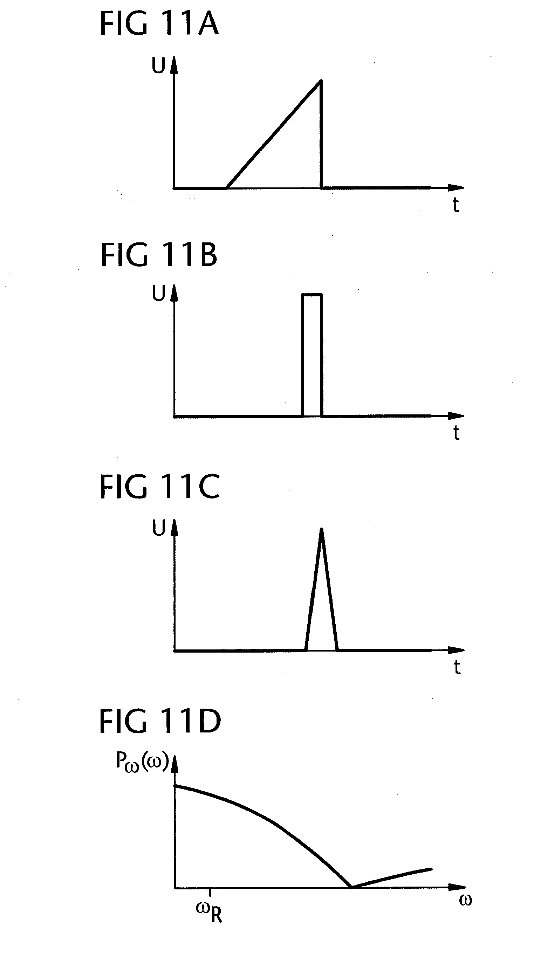

Bei den zum Anregen verwendeten Pulsen handelt es sich um kurze Einzelpulse, die der Dirac'schen Deltafunktion ähneln und insofern als Dirac-Stöße bezeichnet werden können. Die Figuren 11a, 11b, 11c zeigen schematisch entsprechende Pulse, wobei die zum Erzeugen des Pulses an die Spule 20b angelegte Spannung U als Funktion der Zeit dargestellt ist. Um ein zuverlässiges Anregen des Schaltkreises 110 zu gewährleisten, müssen die Anregungspulse eine Spektralfunktion aufweisen, die im Bereich der Eigenresonanzfrequenz des Schaltkreises 110 (in dem jeweiligen Schaltkreiszustand in dem sich der Schaltkreis bei dem Anregen befindet) hinreichend große Werte aufweist. Eine solche Spektralfunktion P_{ω}(ω) (Energiedichte) ist schematisch in Figur 11d dargestellt. Sie weist bei der Eigenresonanzfrequenz ω_{R} des Schaltkreises 110 hohe Werte auf, da ihre erste Nullstelle bei einer Frequenz liegt, die mehr als fünf Mal so hoch ist, wie die Eigenresonanzfrequenz ω_{R} des Schaltkreises 110. Typische Halbwertsbreiten FWHM einer Energieverteilung zum Erzeugen solcher Spektralfunktionen geeigneter Pulse können z.B. in der Größenordnung von 10 ns liegen, d.h. z.B. zwischen 3 ns und 30 ns liegen oder auch zwischen 1 ns und 100 ns liegen, insbesondere wenn ein Schaltkreis mit einer Eigenresonanzfrequenz von ca. 13,56 MHz anzuregen ist.

Anstatt der Anregungsantenne 20b und der Erfassungsantenne 30b kann auch eine Prüfvorrichtungsantenne vorgesehen sein, die sowohl zum Anregen als auch zum Erfassen dient. Idealerweise ist aber sowohl eine Anregungsantenne 20b als auch eine Erfassungsantenne 30b vorgesehen, wobei diese beiden Antennen orthogonal zueinander angeordnet sind. Bei einer solchen orthogonalen Anordnung der Anregungsantenne 20b zu der Erfassungsantenne 30b liegen diese derart zueinander, dass das Signal der Anregungsantenne 20b von der Erfassungsantenne 30b nicht wahrgenommen wird. Die Anregungsantenne 20b ist dabei gegenüber der Erfassungsantenne 30b räumlich so angeordnet, dass in der Erfassungsantenne 30b durch die Anregungsantenne 20b im Wesentlichen kein Signal eingekoppelt wird. Ein Signal wird in eine Spule immer dann eingekoppelt, wenn das Integral über den entsprechenden magnetischen Fluss Φ durch diese Spule größer als Null ist. Das Integral über den magnetischen Fluss Φ ist genau dann Null, wenn sich magnetische Feldlinien unterschiedlicher Richtung und Feldstärke in der Erfassungsantenne über die Gesamtfläche gegenseitig aufheben, oder wenn der Winkel der Feldlinien zur Spulenachse genau 90° beträgt - daher der Begriff der "orthogonale" Anordnung. Eine geeignete, so genannte koplanare orthogonale Anordnung der Anregungsantenne 20b zur Erfassungsantenne 30b kann beispielsweise derart erfolgen, dass die beiden Antennenspulen in einer Ebene in geeigneter Art und Weise teilweise übereinander liegen.

Das Auswerten der erfassten Schwingung kann z.B. wie oben dargestellt digital mittels eines Computers erfolgen. Alternativ oder zusätzlich ist es z.B. auch möglich, die erfasste Schwingung beim Auswerten mittels einer analogen Komparatorschaltung (Differenzverstärker) mit einem Referenzsignal zu vergleichen. Überdies kann ein Oszilloskop zum Auswerten genutzt werden.

## Patentansprüche

1. Verfahren zum Prüfen eines zur Kontaktloskommunikation eingerichteten Schaltkreises (110), wobei der Schaltkreis (110) eine Antenne (120) und ein elektronisches Bauelement (130) umfasst, umfassend die Schritte des
- Anregens (A) des Schaltkreises (110) mittels einem oder mehreren Energiepulsen;
- Erfassens (E) zumindest einer Schwingung des Schaltkreises (110) in Antwort auf das Anregen (A); und
- Auswertens (I) der erfassten zumindest einen Schwingung hinsichtlich von Eigenresonanzeigenschaften des Schaltkreises (110);
**dadurch gekennzeichnet, dass** beim Anregen (A) und/ oder beim Auswerten (I) eine Abhängigkeit einer Eigenresonanzeigenschaft des Schaltkreises (110) von zumindest einem elektrischen Schaltkreiszustand berücksichtigt wird, in welchen der Schaltkreis beim Anregen (A) versetzt wird und der beim Erfassen (E) der zumindest einen Schwingung des Schaltkreises (110) vorliegt.

2. Verfahren nach Anspruch 1, **dadurch gekennzeichnet, dass** die Abhängigkeit der Eigenresonanzeigenschaft des Schaltkreises (110) von zumindest einem elektrischen Schaltkreiszustand berücksichtigt wird, indem der eine oder die mehreren Energiepulse derart ausgewählt werden, dass der Schaltkreis (110) beim Anregen (A) in zumindest einen vorbestimmten elektrischen Schaltkreiszustand versetzt wird.

3. Verfahren nach Anspruch 2, **dadurch gekennzeichnet, dass** die zumindest eine Schwingung des Schaltkreises (110) erfasst wird, wenn der Schaltkreis (110) in den zumindest einen vorbestimmten elektrischen Schaltkreiszustand versetzt ist.

4. Verfahren nach Anspruch 2 oder 3, **dadurch gekennzeichnet, dass** der eine oder die mehreren Energiepulse derart ausgewählt werden, dass der Schaltkreis (110) beim Anregen (A) in einen Betriebszustand versetzt wird.

5. Verfahren nach einem der Ansprüche 1 bis 3, **dadurch gekennzeichnet, dass** das Anregen (A) derart erfolgt, dass der Schaltkreis (110) in einen elektrischen Außerbetriebszustand versetzt wird oder darin verbleibt, wobei die zumindest eine Schwingung des Schaltkreises (110) erfasst wird, wenn der Schaltkreis (110) in dem elektrischen Außerbetriebszustand vorliegt (E), und beim Auswerten (I) der erfassten Schwingung eine Eigenresonanzeigenschaft des Schaltkreises in einem zweiten Zustand des Schaltkreises, der ein zweiter Außerbetriebszustand oder ein Betriebszustand sein kann, errechnet wird.

6. Verfahren nach einem der Ansprüche 1 bis 5, **dadurch gekennzeichnet, dass** das Anregen (A) des Schaltkreises (110) mittels zumindest zwei Energiepulsen erfolgt.

7. Verfahren nach Anspruch 6, **dadurch gekennzeichnet, dass** das Anregen derart erfolgt, dass der Schaltkreis (110) in zumindest zwei verschiedene elektrische Schaltkreiszustände versetzt wird (A1, A2), und für jeden der zumindest zwei verschiedenen Schaltkreiszustände jeweils eine Schwingung des Schaltkreises (110) erfasst wird (E1, E2), wobei diese zumindest zwei erfassten Schwingungen gemeinsam ausgewertet werden (I).

8. Verfahren nach Anspruch 7, **dadurch gekennzeichnet, dass** beim Anregen (A) die zumindest zwei verschiedenen elektrischen Schaltkreiszustände jeweils mittels unterschiedlichen Anzahlen an Energiepulsen hervorgerufen werden.

9. Verfahren nach einem der Ansprüche 6 bis 8, **dadurch gekennzeichnet, dass** ein zeitlicher Pulsabstand (Δt) zwischen den Energiepulsen zumindest fünf mal so groß ist, vorzugsweise zumindest zehn mal so groß ist und besonders bevorzugt zumindest 100 mal so groß ist, wie eine Halbwertsbreite (FWHM) einer Energieverteilung eines der Energiepulse.

10. Verfahren nach einem der Ansprüche 6 bis 9, **dadurch gekennzeichnet, dass** eine Pulsfolgefrequenz der Energiepulse höchstens ein Fünftel, bevorzugt höchstens ein Zehntel und besonders bevorzugt höchstens ein Hundertstel einer Eigenresonanzfrequenz des Schaltkreises (110) beträgt.

11. Verfahren nach einem der Ansprüche 1 bis 10, **dadurch gekennzeichnet, dass** bei dem Auswerten (I) bestimmt wird, ob ein Defekt des Schaltkreises (110) vorliegt, wobei es sich bei dem Defekt vorzugsweise um einen ungeeigneter Widerstand der Antenne (120), eine Unterbrechung der Antenne (120), eine teilweise Unterbrechung der Antenne (120), einen Kurzschluss einer als Antenne (120) dienenden Antennenspule, einen Defekt des elektronischen Bauelements (130) oder ein Fehlen des elektronischen Bauelements (130) in dem Schaltkreis (110) handelt.

12. Verfahren nach einem der Ansprüche 1 bis 11, **dadurch gekennzeichnet, dass** zumindest einer der zum Anregen (A) verwendeten Energiepulse eine Spektralfunktion aufweist, deren erste Nullstelle bei einer Frequenz (ω) liegt, die größer ist als eine Eigenresonanzfrequenz (ω) des Schaltkreises, vorzugsweise zumindest doppelt so groß, besonders bevorzugt zumindest fünf mal so groß und ganz besonders bevorzugt zumindest zehn mal so groß.

13. Verfahren nach einem der Ansprüche 1 bis 12, **dadurch gekennzeichnet, dass** der Schaltkreis (110) mittels einem oder mehreren elektromagnetischen Energiepulsen angeregt wird (A), die induktiv auf die Antenne (120) einwirken und/ oder die Schwingung des Schaltkreises (110) basierend auf elektromagnetischen Wellen erfasst wird (E), die von der Antenne emittiert werden.

14. Verfahren nach einem der Ansprüche 1 bis 13, **dadurch gekennzeichnet, dass** ein Schaltkreis (110) geprüft wird, dessen Eigenresonanzfrequenz und/ oder Eigenresonanzabklingkonstante als Eigenresonanzeigenschaft des Schaltkreises (110) von dem zumindest einen elektrischen Schaltkreiszustand des Schaltkreises (110) abhängig sind.

15. Prüfvorrichtung (10a, 10b) zum Prüfen eines zur Kontaktloskommunikation eingerichteten Schaltkreises (110), wobei der Schaltkreis (110) eine Antenne (120) und ein elektronisches Bauelement (130) umfasst, umfassend:
- eine Anregungseinrichtung (20a, 20b), die eingerichtet ist, den Schaltkreis (110) mittels eines Pulsgebers (21) durch einen oder mehrere Energiepulse anzuregen;
- eine Erfassungseinrichtung (30a, 30b), die eingerichtet ist, zumindest eine Schwingung des Schaltkreises (110) in Antwort auf die Anregung durch die Anregungseinrichtung (20a, 20b) zu erfassen; und
- eine Auswerteeinrichtung (40), die eingerichtet ist, die erfasste zumindest einen Schwingung hinsichtlich Eigenresonanzeigenschaften des Schaltkreises (110) auszuwerten;
**dadurch gekennzeichnet, dass**
die Anregungseinrichtung (20a, 20b) weiter eingerichtet ist, bei der Anregung des Schaltkreises (110) eine Abhängigkeit von Eigenresonanzeigenschaften des Schaltkreises (110) von zumindest einem elektrischen Schaltkreiszustand (110) zu berücksichtigen, der beim Erfassen der zumindest einen Schwingung des Schaltkreises (110) durch die Erfassungseinrichtung (30a, 30b) vorliegt, und/ oder
die Auswerteeinrichtung weiter eingerichtet ist, diese Abhängigkeit bei der Auswertung der erfassten zumindest einen Schwingung zu berücksichtigen.

16. Prüfvorrichtung (10a, 10b) nach Anspruch 15, **dadurch gekennzeichnet, dass** die Prüfvorrichtung (10a, 10b) eingerichtet ist, ein Verfahren nach einem der Ansprüche 2 bis 14 auszuführen.
